# EUROPÄISCHE PATENTANMELDUNG

(11) **EP 1 418 656 A2**
(43) Veröffentlichungstag der Anmeldung: **12.05.2004**
(21) Anmeldenummer: 03400058.8
(22) Anmeldetag: 01.10.2003
(51) Int. Cl.: H02J 9/08, H02K 7/18

(54) **Mobiles, autark arbeitendes Aggregat zur Bereitstellung elektrischer Energie**

(30) Priorität: 07.11.2002 DE 10251833
(71) Anmelder: DORNIER GmbH, 88039 Friedrichshafen (DE)
(72) Erfinder: Düll, Sebastian, 71101 Schönaich (DE); Serden, Andreas, 88709 Meersburg (DE); Waschilewski, Günther, 88099 Neukirch (DE); Fritzsche, Albert, 88677 Markdorf (DE)
(74) Vertreter: Meel, Thomas

(57) **Zusammenfassung**

Die Erfindung betrifft ein mobiles, autark arbeitendes Aggregat zur Bereitstellung elektrischer Energie. Es umfasst zwei Verbrennungskraftmaschinen (21,23) sowie zwei Generatoren (22,24), wobei Verbrennungskraftmaschinen (21,23) und Generatoren (22,24) über ein mehrere Schaltkupplungen (4,4',5,5') umfassendes Übertragungsgetriebe (20) miteinander verbunden sind, und wobei elektrische Kontrollmittel vorhanden ist, mit denen die Schaltkupplungen (4,4',5,5') des Übertragungsgetriebes (20) derart ansteuerbar sind, dass wahlweise jede einzelne der beiden Verbrennungskraftmaschinen (21,23) oder beide Verbrennungskraftmaschinen (21,23) zusammen jeden einzelnen der beiden Generatoren (22,24) oder beide Generatoren (22,24) zusammen antreiben können.

## Beschreibung

Die Erfindung betrifft ein mobiles, autark arbeitendes Aggregat zur Bereitstellung elektrischer Energie, z.B. zur Versorgung von mobilen Rettungsstationen für die medizinische Erstversorgung.

Militärische Aufgaben im Bereich der Führung und Kommunikation, insbesondere auch der sanitären Dienstleistungen, kaum verschieden vom zivilen Einsatz im Katastrophenfall, erfordern hochmobile Einrichtungen, die nur mit einer zuverlässigen netzunabhängigen Energieversorgung betriebsfähig sind. Für größere Leistungen, 150 kW bis zu wenigen MW, bieten verschiedene Hersteller sogenannte Power Packs an. Sie umfassen die Komponenten Verbrennungsmotor mit Generator, beide fest montiert meist in schallgedämmten Containern, z.B. zur Stromversorgung von Baustellen und abgelegenen Regionen im quasistationären Betrieb. Kleinere Leistungseinheiten, auf einem Grundrahmen angeordnet, durch eine große Kompaktheit gekennzeichnet, sind meist Bestandteil größerer Anlagen (USV, Klimatisierung, u.a.).

Die neuere Entwicklung militärischer Energieversorgungsanlagen im Bereich von 1 bis 60 kW, zur DC-Versorgung auch noch kleinere Einheiten, zielt auf eine Reduzierung von Gewicht und Bauvolumen, auf Kraftstoffersparnis und Erhöhung der Zuverlässigkeit. Kleinere Aggregate bilden auch hier eine selbständige Transporteinheit oder werden in einem vom Arbeitsraum eines Containers abgetrennten Raum, dem sog. Technikraum installiert. Eine erhöhte Zuverlässigkeit (Verlängerung der MTBF - Mean Time Between Failure - und Verringerung des Wartungsaufwandes) wird erreicht durch eine reichliche Dimensionierung aller Bauteile und Überwachung der systemsensitiven Funktionen (Temperaturen, Kraftstoff- und Ölvorrat) mittels entsprechender Modifikation der COTS-Produkte (SPS-Steuerung - speicherprogrammierte Steuerung).

Bei der Energieversorgung medizinischer Systeme wird aus Sicherheitsgründen eine gewisse Redundanz gefordert. Eine 100-prozentige Redundanz würde mindestens eine Verdopplung aller grundsätzlich störungsanfälligen Komponenten erfordern; sie scheitert bei hochmobilen Anlagen an den Kosten, dem Mehr an Bauvolumen und Gewicht.

Aus der **GB 267,607 A** ist eine Energieversorgungseinheit aus einem Generator sowie zwei oder mehreren Verbrennungskraftmaschinen bekannt, wobei der Generator und die Verbrennungskraftmaschinen über ein Übertragungsgetriebe derart miteinander verbunden sind, dass lastabhängig jede einzelne oder mehrere der Verbrennungskraftmaschinen zusammen den Generator antreiben.

Beim Einsatz unter extremen Umweltbedingungen können eine rasche Verfügbarkeit der Energieversorgung und die Sicherheit des Betriebes lebenswichtig sein (z.B. Rettungsstationen für medizinische Erstversorgung). Damit stellt sich die Aufgabe, die skizzierte Entwicklungsrichtung zu ergänzen durch die Schaffung einer Teilredundanz, die für die Versorgung der lebensnotwendigen medizinischen Systeme ausreichend dimensioniert wird. Dabei muss eine wesentliche Steigerung der Systemkomplexität und der mechanischen Kenngrößen Gewicht und Bauvolumen vermieden werden. Eine Erweiterung der Mobilität mittels der Fähigkeit des raschen Standortwechsels durch Lufttransport und -abwurf trägt ebenfalls zur Erhöhung der Versorgungssicherheit bei.

Die erfindungsgemäße Lösung der Aufgabe beruht darauf, die geforderte Nennleistung des Energieversorgungsaggregates auf mehrere, vorzugsweise 2 gleiche Teilaggregate mit jeweils einem Verbrennungsmotor und Generator (im folgenden auch Motor-Generator-Aggregat genannt) aufzuteilen und die Abtriebe der beiden Verbrennungsmotoren über ein Getriebe bedarfsgesteuert mit dem einen oder anderen, oder mit beiden Generatoren zu verbinden. Das Signal zur Einstellung des Betriebsmodes liefern Überwachungssensoren des Verbrauchernetzes, der Verbrennungsmotoren und der Generatoren.

Der Forderung nach Gewichtsreduzierung kann in einer vorteilhaften Ausführung durch den Einsatz von Common Rail Technik bei den Verbrennungsmotoren entsprochen werden, was zu einem verminderten Kraftstoffverbrauch führt.

Der Forderung nach Luftabwurf-Fähigkeit des Aggregats kann vorteilhaft durch die Anordnung geeigneter Stoßdämpfer zusammen mit einer momenten-freien Befestigung aller Bauteile entsprochen werden.

Ein besonders vorteilhaftes, sehr kompaktes Aggregat, z.B. für die Verlastung auf einer Europalette (1600 x 1200 mm) oder angeordnet im Technikraum eines Containers (Shelter), lässt sich dadurch verwirklichen, dass die beiden Teilaggregate parallel, also neben- oder übereinander angeordnet werden. Möglich ist aber auch die Anordnung in einer Reihe, Motor - Generator - Generator - Motor. Diese erfordert zwar nur Schaltkupplungen, aber rechts- und links-drehende Motoren und die Dimensionierung der Generatorwellen für das doppelte Drehmoment.

Die erfindungsgemäße Lösung des die Abtriebe der beiden Motoren verbindenden Getriebes ermöglicht die folgenden Betriebsvarianten der Drehmomentenübertragung:

| | |
|---|---|
| Linear | Diesel 1 treibt Generator 1 an und |
| | Diesel 2 treibt Generator 2 an |
| | |
| Gekreuzt | Diesel 1 treibt Generator 2 an oder |
| | Diesel 2 treibt Generator 1 an |
| | |
| Kombiniert | Diesel 1 treibt Generator 1 und Generator 2 an oder |
| | Diesel 2 treibt Generator 1 und Generator 2 an oder |
| | Diesel 1 und 2 treiben Generator 1 und/oder 2 an. |

Wenn hier der Verbrennungsmotor als Dieselmotor bezeichnet wird, so entspricht dies der militärischen Versorgungslogistik. Grundsätzlich gilt das beschriebene Systemkonzept auch bei Verwendung von sonstigen Verbrennungskraftmaschinen, z.B. Benzin- und Gasmotoren oder Mikroturbinen.

Im einfachsten Fall drehen Generator und Motor mit der gleichen Drehzahl (50 Hz /3000 U/min, 60 Hz / 3600 U/min), doch können auch zwischen Motorabtrieb und dem Verbindungsgetriebe ein Unter-/Übersetzungsgetriebe zwischengeschaltet oder polumschaltbare Generatoren verwendet werden. In jedem Fall ist es sinnvoll, das Drehmoment des Motors über eine Fliehkraftkupplung weiterzuleiten, um dessen Anlauf zu erleichtern, Laststöße zu absorbieren und Toleranzen des Wellenversatzes auszugleichen. Die Weiterleitung bzw. Verzweigung des Drehmomentes erfolgt durch zwei elektrische Schaltkupplungen (motorseitig, generatorseitig) je Teilaggregat. Wenn die motorseitige Schaltkupplung offen bleibt, überträgt die Zwischenwelle zwischen Fliehkraftkupplung und generatorseitiger Kupplung (geschlossen) das Drehmoment zum gegenüberliegenden Generator. Ist die motorseitige Kupplung geschlossen, dreht eine auf der Zwischenwelle gelagerte Riemenscheibe mit und überträgt das Drehmoment (voll oder teilweise) zum entsprechend gekuppelten zweiten Teilaggregat.

Eine oder beide der für beide Richtungen der Drehmomentübertragung notwendigen Spannrollen des Flach- oder Zahnriemenantriebs können ergänzend, mit einer weiteren Schaltkupplung versehen, als Nebenabtrieb für eine Wasser- oder Kraftstoffpumpe oder einen Kältekompressor genutzt werden. Als Nebenantrieb ist auch der Anschluss eines fremdnetzgespeisten Elektromotors möglich, wobei dann das beschriebene Aggregat bei ausgekuppelten Verbrennungsmotoren als elektromechanischer Wandler arbeitet.

Als weitere Variante ist schließlich auch die Anordnung eines dritten Motor-Generator-Aggregats möglich, wobei der verbindende Riemen dann über drei Scheiben läuft. Für die Teilredundanz ergibt sich der Vorteil einer Leistungsverfügbarkeit im Störungsfall eines Motor-Generator-Aggregats von 67 %.

Alternativ können bei Einsatz eines dritten Motor-Generator-Aggregats jeweils zwei dieser Teilaggregate über einen Riementrieb verbunden sein. In diesem Falle ist bei einem Teilaggregat eine zweite per Kupplung zuschaltbare Riemenscheibe auf der Zwischenwelle notwendig.

In Verallgemeinerung der bisher beschriebenen Ausführungen können zwecks Erhöhung der Teilredundanz auch mehr als drei Teilaggregate eingesetzt werden, die entweder über einen gemeinsamen Riementrieb oder jeweils paarweise koppelbar sind.

Eine bevorzugte Generatorbauart ist der 230/400 V Synchrongenerator. Kritische Verbraucher werden aus einem batteriegepufferten 24 V DC-Kreis versorgt. Der erforderliche Gleichrichtersatz kann alternativ von beiden Generatoren gespeist werden.

Die Verbraucher sind gemäß DIN VDE 0107 den Klassen der Versorgungssicherheit zuzuordnen:

| | |
|---|---|
| Klasse 1 | Verbraucher hoher Priorität |
| Klasse 2 | Verbraucher mittlerer Priorität |
| Klasse 3 | Verbraucher geringer Priorität. |

Als wesentliche Belastungs- und Qualitätsparameter werden die Ströme (Wirk- und Blindanteile) und die Spannungen der 3 Phasen, die Frequenz, der Leistungsfaktor der Oberschwingungen sowie die symmetrische Lastverteilung elektronisch detektiert und mit vorgegebenen Grenzwerten verglichen (SPS-Steuerung). Dies sichert die frühzeitige Erkennung von sich anbahnenden Störungen und ermöglicht das voreilende Einleiten entsprechender Maßnahmen des Lastmanagements.

Fällt einer der beiden Verbrennungsmotoren aus, werden beide Generatoren von dem verbleibenden Verbrennungsmotor angetrieben. Die prioritäre Energieversorgung wird aufrechterhalten, während die Verbraucher mit niederigerer Priorität nicht mehr versorgt werden. Alternativ ist es auch möglich, mit dem verbleibenden Verbrennungsmotor nur einen der beiden Generatoren anzutreiben und den anderen von Netz zu nehmen.

Fällt Generator 1 aus, erfolgt die prioritäre Energieversorgung durch Generator 2 und umgekehrt, wobei eine ergänzende Deckung des 24 V Bedarfs temporär aus der Batterie erfolgen kann. Der verbleibende Generator kann von einem oder von beiden Verbrennungsmotoren angetrieben werden. Eine Verdopplung der Nennleistung jedes Generators, (die sich auf den ersten Blick anbietet, da ja noch beide Verbrennungsmotoren für den Antrieb zur Verfügung stehen) ist zwar als weitere Ausführung der Erfindung möglich, bringt aber insgesamt nur eine relativ ineffiziente Verbessung der Teilredundanz mit sich. Die Generatoren sind sicher nicht die störungsanfälligsten Komponenten; überdies werden sich Bauvolumen und Gewicht nur für die bessere Beherrschung dieses seltenen Störfalls ganz wesentlich erhöhen.

Der Betrieb der Verbrennungsmotoren ist hinsichtlich des Auslastungsgrades, der Kühlwasser- und Abgastemperatur zu überwachen und wie oben mit den programmierten Grenzwerten zu vergleichen.

Liegt der optimale Motorwirkungsgrad im Teillastbereich, kann es hinsichtlich des Kraftstoffverbrauchs zweckmäßig sein, die Last auf beide Motoren gleichmäßig zu verteilen. Bei sehr geringem Energiebedarf ist die Bereitstellung aus einem Motor wieder günstiger. Sinnvoll ist es, bei der Lastverteilung auf annähernd gleiche Laufzeiten beider Motoren zu achten, auch um die Wartungsintervalle gleichzuhalten. Durch die erfindungsgemäße Kopplung beider Verbrennungsmotoren mit beiden Generatoren ist hier eine erhöhte Flexibilität im Einsatz der Verbrennungsmotoren möglich.

Die vorzugsweise wassergekühlten Dieselmotoren und Aggregate werden gemeinsam durch eine geräuschdämmende Kapsel abgedeckt. Dies ist auch insofern vorteilhaft, als die empfindlichen Bauteile der Anlage bei einem ABC-Angriff vor einer Kontamination bewahrt werden. Die aus thermischen Gründen getrennten Kühlwasserkreise von Motor, Abgaskühler, Generator und Innenraum (Strahlung) werden auf gemeinsame Wärmetauscher-Einheiten geführt, die der Größe entsprechend von mehreren Gebläsen (vorzugsweise Axialgebläsen) mit Umgebungsluft gekühlt werden. Um das Bauvolumen der Gesamtanlage nicht durch leeren Raum für die Kühlluftführung zu vergrößern, werden die Wärmetauscher beweglich an Scharnieren angelenkt und das Kühlwasser durch Schläuche zu- und abgeführt.

Die für den LKW-, Bahn- und Luftransport geltenden Vorgaben möglicher auftretender Beschleunigungen in Längs-, Quer- und Hochrichtung machen eine stoßabsorbierende Befestigung aller Komponenten notwendig, vor allem so, dass Beschleunigungskräfte kein Zusatzmoment auf die Befestigungselemente liefern. Betriebsbedingte Vibrationen dürfen sich nicht auf die Umgebung übertragen, vor allem nicht auf einen formschlüssig benachbarten Arbeitsraum. Den Lastfall des Luftabwurfs kann die Dimensionierung der Stoß- und Schwingungsdämpfer berücksichtigen. Ist dies dynamisch oder konstruktiv nicht möglich oder unzweckmäßig, kann der Grundrahmen des Aggregats auf eine ihrerseits stoßgedämpfte Plattform gesetzt werden.

Insgesamt wird durch die Erfindung ein Aggregat geschaffen, mit dem eine hohe Zuverlässigkeit der Energieversorgung erreicht werden kann, ohne dass Bauvolumen und Eigengewicht wesentlich gesteigert werden müssten.

Im Folgenden werden unter Bezugnahme auf Zeichnungen konkrete Ausführungsbeispiele der Erfindung beschrieben. Es zeigen:
- Fig. 1: den Längsschnitt durch ein Teilgetriebe, angeordnet zwischen Verbrennnungsmotor und Generator eines Teilaggregats;
- Fig. 2: schematisch eine Ausführung des Gesamtaggregats aus zwei identischen Teilaggregaten, deren Getriebe miteinander verbunden sind;
- Fig. 3: das Blockschaltbild der Energieverteilung für AC- und DC-Verbraucher;
- Fig. 4: das auf einem Anhänger verlastete Gesamtaggregat in drei Ansichten.

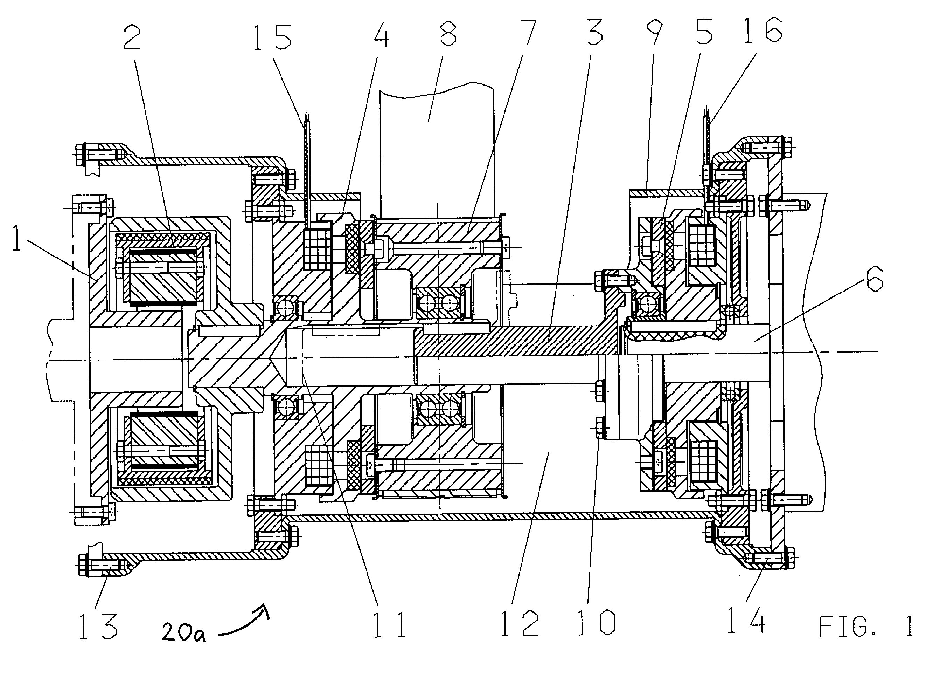

Das Übertragungsgetriebe zur wahlweisen Drehmomentenübertragung von einem der beiden Verbrennungsmotoren zu einem oder beiden Generatoren umfasst zwei über einen Riementrieb koppelbare und parallel zueinander angeordnete Teilgetriebe. Die Teilgetriebe sind im wesentlichen identisch aufgebaut. Fig. 1 zeigt ein solches Teilgetriebe 20a im Längsschnitt. In die Scheibe 1 mit Nabe leitet die Abtriebswelle des Verbrennungsmotors das Drehmoment ein. Nach Erreichen der Nenndrehzahl kuppelt die - optionale - Fliehkraftkupplung 2 und leitet damit das Moment an die Getriebwelle 3 und die motorseitige Schaltkupplung 4 weiter. Soll der in Linie angeordnete Generator angetrieben werden, bleibt die Kupplung 4 offen (elektrisch nicht aktiviert oder nur Ruhestrom) und die generatorseitige Schaltkupplung 5 muss schließen. Damit überträgt sich das Drehmoment auf die Generatorwelle 6.

Soll allein der parallel liegende Generator angetrieben werden, muss die motorseitige Schaltkupplung 4 schließen und die generatorseitige Kupplung 5 öffnen. Damit dreht das Riemenrad 7 mit und der Riemen 8, hier als Zahnriemen dargestellt, überträgt die Motorleistung an den zweiten Generator. Das Getriebegehäuse ist an der mit Bezugsziffer 9 gekennzeichneten Stelle aufgebrochen. Ergibt sich die Notwendigkeit eines Riemenwechsels, muss die Verschraubung 10 gelöst und die Getriebewelle 3 in die gestrichelt dargestellte Position 11 verschoben werden. Mit dem dann entstehenden freien Raum 12 kann der Riemen 8 vom Riemenrad 7 abgezogen und entnommen und ein neuer Riemen aufgesetzt werden.

Mit den Flanschen 13 und 14 wird das Getriebegehäuse am Verbrennungsmotor und am Generator starr befestigt, wodurch sich eine kompakte Einheit ergibt. Mit 15 und 16 sind die Stromzuführung der Schaltkupplungen angedeutet.

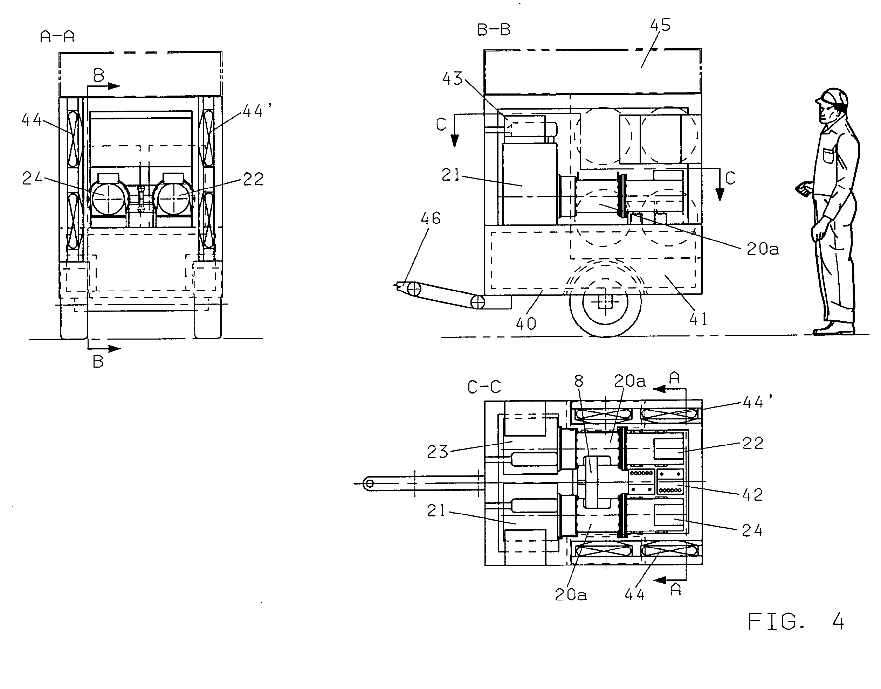

Mit der schematischen Darstellung von Fig. 2 wird der mechanische Aufbau des Gesamtaggregats verdeutlicht. Es umfasst die zwei Verbrennungsmotoren 21,23, die über das Übertragungsgetriebe 20 mit den beiden Generatoren 22,24 verbunden sind. Das Übertragungsgetriebe 20 umfasst zwei Exemplare eines in Fig. 1 dargestellten Teilgetriebes 20a, welche mittels Riemen 8 koppelbar sind. Ist die Drehzahl der Motoren 21 und 23 verschieden von der der Generatoren 22 und 24, muss zwischen den Fliehkraftkupplungen 2 und 2' und den motorseitigen Schaltkupplungen 4 und 4' ein hier nicht dargestelltes Über-/Untersetzungsgetriebe zwischengeschoben werden. Der Zahnriemen 8 verbindet die mit der Abtriebsseite der motorseitigen Schaltkupplungen 4 und 4' verbundenen Riemenscheiben 7 und 7'. Die generatorseitigen Schaltkupplungen 5 und 5' sind den Generatoren 22 und 24 zugeordnet.

Die gezielte Ansteuerung der Schaltkupplungen 4, 4', 5, 5' ergibt somit die anforderungsgemäßen Arten des Betriebs von Verbrennungsmotoren und Generatoren, nämlich
Antrieb beider Generatoren mit einem der beiden Verbrennungsmotoren;
Antrieb eines Generators mit dem in Linie liegenden Verbrennungsmotor;
Antrieb eines Generators mit dem parallel liegenden Verbrennungsmotor;
Antrieb einer und/oder beider Generatoren durch beide Verbrennungsmotoren im Verbund.

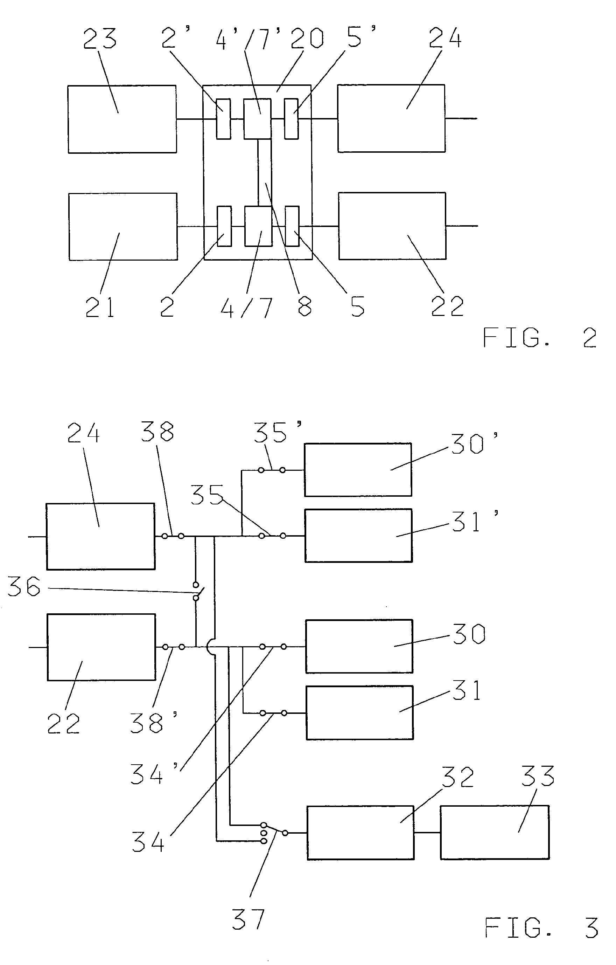

Die Stromverteilung beider Generatoren 22 und 24 auf die zugeordneten Netze 30 und 30' (AC-Netze hoher Priorität) und 31 und 31' (Netze geringerer Priorität), geht aus Fig. 3 hervor. Die Schalter 34 und 34', 35 und 35' sind wie dargestellt geschlossen, wenn die zugeordneten Generatoren 22 bzw. 24 mit der vollen Leistung zur Verfügung stehen. In diesem Fall ist Schalter 36, der die elektrische Verbindung beider Teilnetze ermöglicht, offen.

Fällt einer der beiden Verbrennungsmotoren aus, werden bevorzugt beide Generatoren 22,24 von dem verbliebenen Verbrennungsmotor angetrieben. Die Versorgung der prioritären Netze 30,30' wird trotz der verminderten verfügbaren Leistung aufrechterhalten (Schalter 34',35' geschlossen), die Netze mit niedrigerer Priorität 31,31' werden abgeschaltet (Schalter 34,35 offen).

Fällt einer der Generatoren aus (für das folgende Beispiel Generator 22), so übernimmt Generator 24 die Versorgung der prioritären Netze 30,30' (Schalter 34',35' und 36 geschlossen), während die Netze mit geringerer Priorität 31,31' abgeschaltet werden (Schalter 34,35 offen). Der Generator 22 wird mittels Schalter 38' vom Netz genommen.

DC-Verbraucher 33 werden über das Gleichrichtermodul 32 versorgt, wobei der Wechselschalter 37 dafür sorgt, dass die AC-Stromzufuhr alternativ nur aus einem Generator erfolgen kann. Der Umschaltvorgang kann durch einen Batteriepuffer überbrückt werden.

Einen beispielhaften Gesamtaufbau der Energieversorgungsanlage, hier in mobiler Ausführung, zeigt Fig. 4 in 3 Ansichten. Die Grundfläche des einachsigen Anhängers 40 entspricht den Abmessungen von zwei Europaletten. Um eine günstige Schwerpunktlage der Nutzlast mit voller Betankung zu erreichen, sind die Motoren 21 und 23 mit den Generatoren 22 und 24 auf der Oberseite des Kraftstofftanks 41 angeordnet. Das zweiteilige Übertragungsgetriebe 20 mit dem Riemen 8 (Fig.1) bildet den Mittelteil des Stromerzeugungsaggregats.

Wesentliche weitere Komponenten sind der Batteriesatz 42, die ABC-dichte und schalldämmende Kapselung 43 der wassergekühlten Motoren, Abgaskühler sowie Generatoren. Die Wasserkühlung der Motoren erfolgt bevorzugt in thermisch getrennten Kreisen, die zu den außenliegenden luftgekühlten Wärmetauschern mit Gebläsen 44,44'geführt werden. Die Wärmetauscher werden im Interesse der Kompaktheit und Dekontaminierbarkeit von ABC-Kampfstoffen der Gesamtanlage für den Betrieb ausgeklappt.

Um einen längeren, d.h. mehrtägigen Anlagenbetrieb ohne Kraftstoffnachschub zu ermöglichen, kann oben auf die Anlage ein weiterer Tank 45 aufgesetzt werden.

Der Fähigkeit zum Luftabwurf wird abhängig von der Bauart des Lastenfallschirms durch die Anordnung geeignet dimensionierter Schwingungsdämpfer zwischen den Komponenten und dem Grundrahmen und erforderlichenfalls durch eine hier nicht eingezeichnete Zwischenplatte unter dem Kraftstofftank zur Aufnahme der Bewegungsenergie genügt.

Der begrenzte Laderaum für Luftfrachten macht das Abheben oder Hochklappen der höherverstellbaren Deichsel 46 erforderlich.

## Patentansprüche

1. Mobiles, autark arbeitendes Aggregat zur Bereitstellung elektrischer Energie, umfassend zwei Verbrennungskraftmaschinen (21,23) sowie zwei Generatoren (22,24), wobei Verbrennungskraftmaschinen (21,23) und Generatoren (22,24) über ein mehrere Schaltkupplungen (4,4',5,5') umfassendes Übertragungsgetriebe (20) miteinander verbunden sind, und wobei elektrische Kontrollmittel vorhanden ist, mit denen die Schaltkupplungen (4,4',5,5') des Übertragungsgetriebes (20) derart ansteuerbar sind, dass wahlweise jede einzelne der beiden Verbrennungskraftmaschinen (21,23) oder beide Verbrennungskraftmaschinen (21,23) zusammen jeden einzelnen der beiden Generatoren (22,24) oder beide Generatoren (22,24) zusammen antreiben können.

2. Aggregat nach Anspruch 1, **dadurch gekennzeichnet, dass** das Übertragungsgetriebe (20) folgendermaßen aufgebaut ist:
es umfasst zwei im wesentlichen baugleiche Teilgetriebe (20a), wobei ein Teilgetriebe jeweils eine motorseitige (4,4') und eine generatorseitige (5,5') Schaltkupplung, die in Linie zu jeweils einer Verbrennungskraftmaschine und einem Generatoren angeordnet sind, umfasst, und die beiden Teilgetriebe (20a) über einen Riementrieb (7,8) an der Abtriebsseite der beiden motorseitigen Schaltkupplungen (4,4') koppelbar sind.

3. Aggregat nach Anspruch 1 oder 2, **dadurch gekennzeichnet, dass** die Schaltsignale der Steuermittel für die Schaltkupplungen (4,4',5,5') aus dem Leistungsbedarf, der Aggregatsüberwachung und den Störsignalen des Aggregatbetriebes abgeleitet werden können.

4. Aggregat nach einem der Ansprüche 2 oder 3, **dadurch gekennzeichnet, dass** die Spannrollen des Riementriebs (7,8) als Nebenabtrieb für eine weitere Arbeitsmaschine ausgebildet sind.

5. Aggregat nach einem der Ansprüche 2 bis 4, **dadurch gekennzeichnet, dass** der Riementrieb (7,8) mittels eines fremdnetz-gespeisten Elektromotors angetrieben werden kann, so dass das Aggregat als elektromechanischer Wandler arbeitet.

6. Aggregat nach einem der vorangehenden Ansprüche, **dadurch gekennzeichnet, dass** mindestens ein weiteres Teilaggregat aus Verbrennnungskraftmaschine (21,23), Generator (22,24) und Teilgetriebe (20a), letzteres im wesentlichen baugleich zu den Teilgetrieben der vorhergehenden Ansprüche, parallel angeordnet ist, wobei die Teilgetriebe (20a) über einen gemeinsamen Riemen (8) koppelbar sind.

7. Aggregat nach einem der vorangehenen Ansprüche 1 bis 5, **dadurch gekennzeichnet, dass** mindestens ein weiteres Teilaggregat aus Verbrennnungskraftmaschine (21,23) , Generator (22,24) und Teilgetriebe (20a), letzteres im wesentlichen baugleich zu den Teilgetrieben der vorhergehenden Ansprüche, parallel angeordnet ist, und die Teilgetriebe (20a) jeweils paarweise über einen Riemen (8) koppelbar sind, wobei hierfür mindestens ein Teilgetriebe des bestehenden Aggregats eine zusätzliche Schaltkupplung aufweist.
